# EUROPEAN PATENT SPECIFICATION

(11) **EP 3 009 056 B1**
(45) Date of publication and mention of the grant of the patent: **03.10.2018**
(21) Application number: 14810831.9
(22) Date of filing: 12.06.2014
(51) Int. Cl.: B29C 70/34, A47K 3/40, B29C 70/08, B29C 70/18

(54) **METHOD FOR PRODUCING A LIGHTWEIGHT TEXTURED SHOWER TRAY**
VERFAHREN ZUR HERSTELLUNG EINER LEICHTEN TEXTURIERTEN DUSCHWANNE
PROCÉDÉ DE FABRICATION D'UN RECEVEUR DE DOUCHE LÉGER TEXTURÉ

(30) Priority: 13.06.2013 ES 201300561
(43) Date of publication of application: 20.04.2016
(73) Proprietor: Novaralis Sl., 03160 Alicante (ES)
(72) Inventor: MORATA LOPEZ, Daniel, 03160 Alicante (ES)
(74) Representative: Lorente Berges, Ana
(86) International application number: PCT/ES2014/070487
(87) International publication number: WO 2014/198990

(56) References cited:
- EP-A2- 0 321 264
- WO-A1-2007/041449
- WO-A1-2012/050171
- DE-A1- 10 131 338
- DE-A1-102011 083 004
- GB-A- 2 402 363
- GB-A- 2 440 719
- GB-A- 2 486 270
- JP-A- H06 114 980
- JP-A- 2001 121 633
- JP-A- 2001 191 419
- US-A1- 2007 163 193
- US-A1- 2011 293 914

## Description

### OBJECT OF THE INVENTION

The present invention generally belongs to the field of construction, and more specifically to the production of bathroom elements.

A first object of the invention is a production method for obtaining a new lightweight textured shower tray made of a very light material in comparison with conventional shower trays.

### BACKGROUND OF THE INVENTION

In recent years, shower trays have become the preferred option of the public well above traditional bath tubes. In order to satisfy the demand increase, a myriad of different shower tray models are currently present in the market. Among these, some known existing shower trays are provided with a texture having both a decorative function and a practical function, since said texture decreases the chance of the user slipping while in the shower.

However, an important drawback of currently known shower trays is their high weight. Indeed, currently known shower trays are usually made of two materials: a resin acting as binding element, and a marble load providing the required strength. However, both the weight of the resin and the weigh of the marble load can be around 30 kg, so the total weight of such a shower tray is frequently over 60 kg. This high weight is disadvantageous for handling and transporting the shower tray, specially for exportation, the price of the product for the final client being significantly increased. Further, this high weight is also disadvantageous for installation technicians, since two people are required for installing such a shower tray.

### DESCRIPTION OF THE INVENTION

The inventor of the present invention, which is defined in claim 1, realized the possibility to produce shower trays from a much lighter material, specifically high density expanded polystyrene, which had never been used for producing shower trays; said material was thought not to be sufficiently resistant to withstand the forces shower trays are usually subject to during their life.

However, the inventor carried out charge tests with shower trays produced from high density expanded polystyrene and found out that a shower tray having a thickness of about 3 cm of said material is sufficiently resistant for supporting the users. Specifically, using this material allows for a great reduction in the weight of the shower tray of the invention, which can be about 4 kg. This allows the shower tray more conveniently handled and transported, thus lowering the price of the final product, and also allows the installation of the shower tray to be carried out by one person.

A first aspect of the present invention is directed to the method defined in claim 1 for producing a high density expanded polystyrene textured shower tray. This method mainly comprises the following steps:
1) Introducing glass fiber fabrics inside a textured shower tray mold.
2) Laminating the glass fiber fabrics with a special resin.
3) Placing a high density expanded polystyrene plate having a shower tray shape inside the mold, on the laminated glass fiber fabrics.
4) Applying vacuum to the mold, the glass fiber fabrics and the high density expanded polystyrene plate for imprinting the texture onto the glass fiber fabrics and sticking said glass fiber fabrics onto the high density expanded polystyrene plate.

Now, the steps of the method of the invention are disclosed in detail:
1) Introducing glass fiber fabrics inside a textured shower tray mold.
   Preferably, these glass fiber fabrics are made using cut and dispersed threads, and also a binder in powder form and an emulsion. The result is a fabric having a thickness and rigidity specially suited for the present method, being water-resistant and suitable for a quick stamping.
   The textured shower tray mold can be obtained in different ways, although in a preferred embodiment of the invention the following method is used:
   - First, a catalyzed resin is applied on a glass fiber fabric placed on a part having the final texture desired for the shower tray. The glass fiber fabric, in a flexible condition, is placed on the part and subsequently laminated using a roller impregnated with resin for causing the fiber to adopt the texture of the part. Then, the fabric is allowed to dry, thus becoming hard.

   Examples of textures for the part may be a slate texture, wood texture, marble texture, etc., this texture of the part used as a mold being adopted by the glass fiber.
   The catalyzed resin is a resin mixed with a catalyzer for shortening the drying process thus allowing for a faster hardening process.
   - Next, said glass fiber fabric, with the desired texture, is adhered on a shower tray pre-mold. The adherence step is usually carried out by means of the catalyzed resin itself.
   - In a more preferred embodiment, a reinforcing structure is provided on the back side of the glass fiber in order to increase its strength. Each mold is used for producing a plurality of shower trays, and therefore it must be sufficiently resistant. The reinforcing structure can be conformed in several ways, although it is preferably a structure comprising ribs.
2) Laminating the glass fiber fabrics with a resin
   Once the glass fiber fabrics are inside the shower tray mold having the desired texture, they are laminated using a special resin. This resin is an insaturated polyester resin, ortoftalic, rigid, having medium reactivity and viscosity, such as for example Resichim 752, dissolved in styrene and in a metacrylic monomer. Importantly, this resin must not be abrasive for polystyrene.
   In an alternative embodiment, it is additionally possible to place on the glass fiber fabrics an extruded polypropylene net or mesh. This material withstands up to 150 ºC and allows the passage of about 98 g/m2 of resin, thus being specially suitable for the resin used in the present invention whose highest temperature peak is around 85 ºC. The function of the mesh is allowing for a greater resin circulation inside the closed mold to which vacuum is applied, thus allowing the resin to reach every air micro bubble in the circuit.
3) Placing a high density expanded polystyrene plate having a shower tray shape inside the mold, on the laminated glass fiber fabrics.
   The high density expanded polystyrene having a shower tray shape are usually obtained from a cube cut into sheets. Next, each sheet is provided with a drain hole and a slope towards said drain hole. Raw high density polystyrene sheets having a shower tray shape, that is, without any texture, are thereby obtained.
4) Applying vacuum to the mold, the glass fiber fabrics and the high density expanded polystyrene plate for imprinting the texture on the glass fiber fabrics and sticking said glass fiber fabrics on the high density expanded polystyrene plate.

The result is that the glass fiber fabrics adopt the texture of the mold, and also firmly stick on the high density expanded polyester plate with no air bubble, thus rendering a lightweight shower tray completely finished with the desired texture. This step of the method is novel in comparison with equivalent methods known in the art.

In principle, the application of vacuum may be carried out in any known manner in the art. However, in a particularly preferred embodiment of the present invention, the application of vacuum comprises:
- Placing a rigid cover on the mold and the plate for ensuring that, when the vacuum is applied, all the surface is flush: with no deformities on the upper side and no texture defects on its lower side.
- Placing a vacuum spiral tube along the mold perimeter for applying the vacuum charge simultaneously along the whole shower tray perimeter, such that the air extraction is also the same.
- Placing a vacuum bag around the whole mold for applying the vacuum. Preferable, the vacuum bag is a thermo-stabilized nylon film having a high elongation and withstanding temperatures of up to 204 ºC, with a maximum elongation of 400% and a resistance to tension of 55 MPa.
- Finally, applying vacuum to the bag by means of a hose coupled to a vacuum machine.

The present disclosure is also directed to a lightweight textured shower tray produced according to the method disclosed, made of high density expanded polystyrene and having a thickness of about 3 cm.

### BRIEF DESCRIPTION OF THE FIGURES

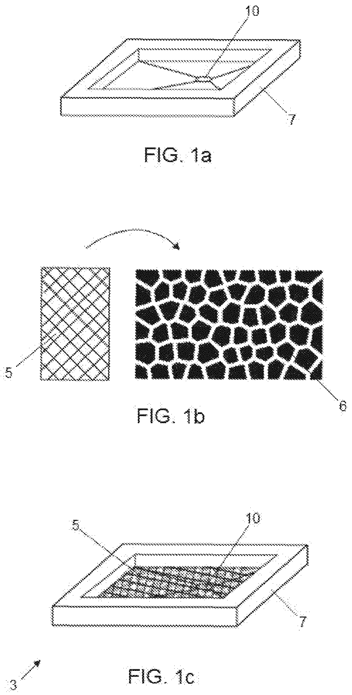

Figs. 1a, 1b and 1c schematically show some steps of the process for obtaining a mold having a slate texture, specifically respectively a shower tray pre-mold, the step of applying a glass fiber fabric on a stone having a natural slate texture, and the mold having a slate texture obtained.

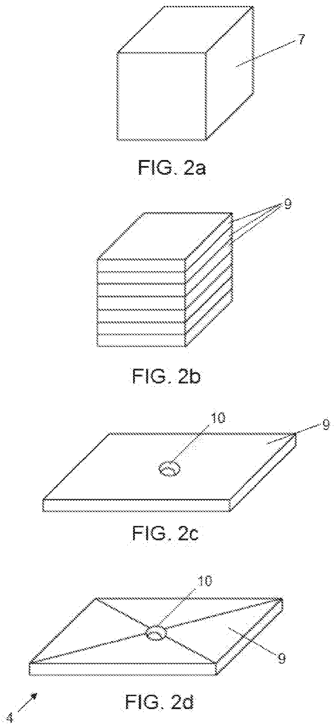

Figs. 2a, 2b, 2c and 2d schematically show some steps of the process for treating a raw high density expanded polystyrene cube for obtaining high density expanded polystyrene plates, specifically respectively a raw high density expanded polystyrene cube, the cube once cut in sheets, a sheet already provided with a drain hole, and a sheet once the drain slopes are made.

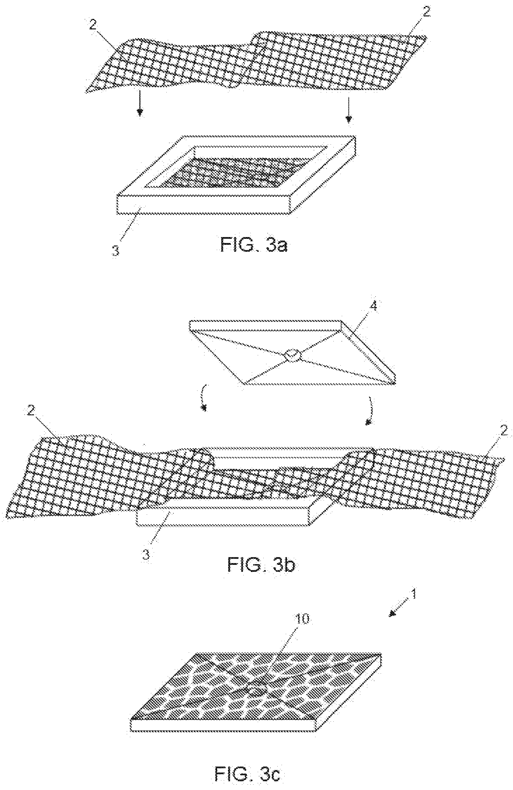

Figs. 3a, 3b and 3c schematically show some steps of a first example of a process for producing a shower tray having a slate texture according to the invention, specifically respectively the application of glass fiber fabrics on a shower tray mold having a slate texture, the application of a high density expanded polystyrene plate having a shower tray shape on the mold having a slate texture, and the lightweight shower tray having a slate texture obtained.

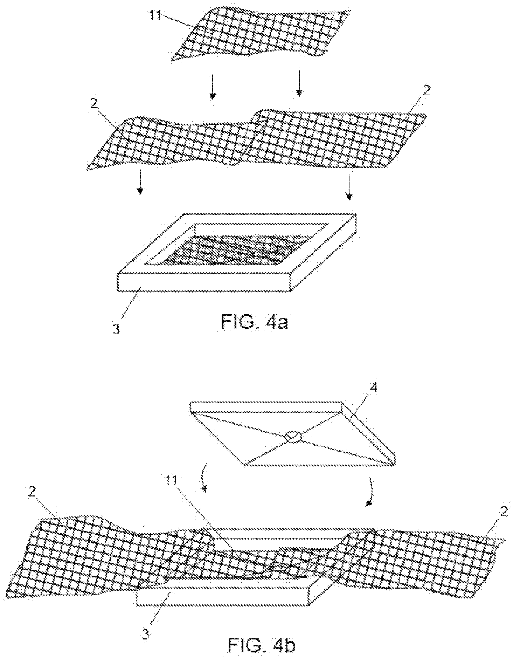

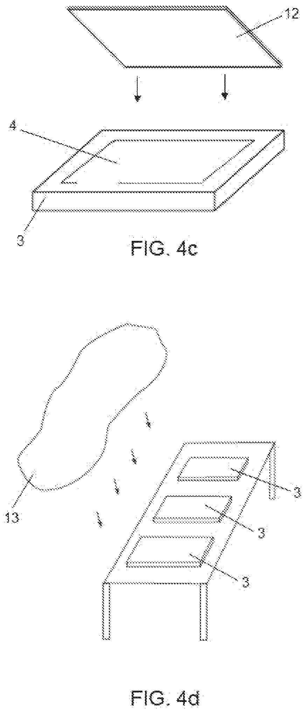

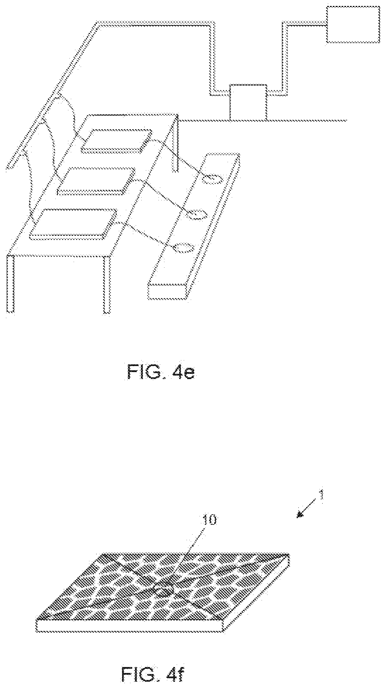

Figs. 4a, 4b, 4c, 4d, 4e y 4f schematically show some steps of a second example of a process for producing a shower tray having a slate texture according to the invention.

### PREFERRED EMBODIMENT OF THE INVENTION

Now, an exemplary embodiment of the method of the invention for producing a lightweight shower tray (1) having a slate texture is disclosed. Note, however, that this example is not limiting, and it would be possible to use this method for producing a shower tray (1) having other textures.

### a) Production of the molds (3) having a slate texture

The molds (3) are produced from a pre-mold (7) made of wood and having a shower tray shape. The pre-mold (7) corresponds in this example to a shower tray having a total thickness of only 3 cm and having slopes with a deepness of 1.5 cm falling diagonally towards the drain hole (10), thus allowing for a perfect evacuation of water falling on the finished shower tray. The dimensions intended for this pre-mold (7) comprise a 3 cm thickness because it is not possible to make a thinner shower tray, since that would be problematic from the point of view of mechanical resistance. In this respect, note that due to the evacuation slopes, in the drain hole zone the effective thickness of the plate would be of about 1.5 cm. Fig. 1a shows a view of an example of pre-mold.

Once the pre-mold (7) having the slopes is made, glass fiber fabrics (5) are laminated with catalyzed resins on a block (6) of natural slate stone, as shown in Fig. 1b. The result is that the glass fiber (5) adopts the slate texture.

Next, said glass fiber (5) having the slate texture is sticked on the above disclosed wooden pre-mold (7), thus rendering the final mold (3), as shown in Fig. 3a. A structure in the back side of the glass fiber (5) in order to provide resistance can also be added. This is carried out by means of the provision of ribs for preventing the mold (3) structure to collapse in subsequent steps, specially during the vacuum treatment, since each mold (3) is made for producing up to 1000 shower trays (1). The ribs ensure the mold (3) is durable, and the frame around the mold (3) perimeter allow the operators to handle the molds in a convenient way.

### b) High density expanded polystyrene treatment

The high density expanded polystyrene is provided in the shape of solid cubes or parallelepipeds (8) of about 5x5 meters, as shown in Fig. 2a. Once this cube (8) is received in the factory, a cutting machine known as a "precision cutting machine" or "squaring tool" is used for obtaining plates (9) of high density expanded polystyrene having the necessary dimensions for the production of the shower tray, that is, having a nucleus of 3 cm of thickness allowing for the plate (9) to fit snugly in the mold (3). Fig. 2b show the initial high density expanded polystyrene cube (8) cut into a plurality of plates (9), while Fig. 2c shows in greater detail an individual plate (9) where the drain hole (10) has been made. The length of the plate (9) may remain undefined, since it depends on the measures required by the client.

Next, the sheet (9) of Fig. 2c is taken to another machine known as a "pantograph". This machine provides the bottom planes of the plate (9) with a calibrated slope towards the drain hole (10) of 1.5 cm of deepness, ensuring that water is always running and which adapts to the dimensions provided to the mold (3). The slopes run diagonally from the corners of the square or rectangle shaped shower tray towards the drain hole. The result, shown in Fig. 2d, is a raw plate (4) having a shower tray shape but no texture.

### c) Production of the shower tray (1)

Once the mold (3) and the made-to-measure expanded polystyrene plate (4) are ready, the production of the final shower tray (1) is carried out.

Figs. 3a-3c show a first example of the production of a final shower tray (1). In this case, firstly two glass fiber fabrics (2) longer than the shower plate dimension are introduced in the mold (3), this allowing for subsequently finishing the sides (Fig. 3a). Next, the glass fiber fabrics (2) are laminated with a resin, soaking them well and leaving no wrinkles. Next, the high density expanded polystyrene plate (4) shown in Fig. 2d is placed on the fabrics (2) such that it starts soaking (Fig. 3b). Once the plate (4) is inside the mold (3), the fabric (2) excess is folded and placed on the upper part. Now, vacuum bags are carefully placed such that air cannot escape. Finally, a vacuum machine is used for the whole set of elements, such that the glass fiber fabrics (2) stick to the plate (4) without any air bubble due to the vacuum applied. The result is a shower plate (1) formed by a high density expanded polystyrene plate (4) where the bottom surface is covered by the glass fiber having a slate texture (Fig. 3c).

Figs. 4a-4f show a second example of a method for producing the shower tray (1) where, in addition to the glass fiber fabrics (2), a distribution net or mesh (11) for a better soaking of the plate (4) with the resin is applied, and further a cover (12) and a spiral tube (not shown) is used for evening the pressure exerted by the vacuum.

More specifically, firstly the extruded polypropylene net or mesh (11) is applied on the glass fiber fabrics (2) once they are laminated with the resin (Fig. 4a). Next, the high density expanded polystyrene plate (4) of Fig. 2d is placed on the mesh (11) and the fabrics (2) (Fig. 4b). Once the plate (4) is soaked with the resin, the cover (12) is placed on the plate (4) and the mold (3) (Fig. 4). The cover (12) may be made of wood, aluminum, or in general any rigid material capable of firmly sealing the elements mentioned. Then, a spiral vacuum tube (not shown) is placed around the perimeter of the mold (3) and, next, the mold (3) is introduced in a vacuum bag (13), adhering the bag (13) by means of an adhesive around the perimeter (3) of the mold (3) such that vacuum can be applied (Fig. 4d). Subsequently, a fast coupling hose is provided between the bag and a vacuum machine, and the latter is turned on. The pressure caused by the vacuum causes the fabrics (2) to stick onto the plate (4) with no air bubble, such rendering the final shower tray (1) having a slate texture.

## Claims

1. Method for producing a lightweight textured shower tray (1) having a rectangular or square shape with slopes running diagonally from the corners of the shower tray (1) towards a drain hole (10), **characterized by** comprising the following steps:
- introducing glass fiber fabrics (2) inside a textured shower tray mold (3);
- laminating the glass fiber fabrics (2) with a resin inside the textured shower tray mold (3);
- placing a high density expanded polystyrene plate (4) with a shower plate shape inside the mold (3), on the laminated glass fiber (2) fabrics; and
- applying vacuum to the mold (3), the glass fiber fabrics (2) and the high density expanded polystyrene plate (4) for imprinting the texture of said mold (3) onto the glass fiber fabrics (2) and sticking said glass fiber fabrics (2) onto the high density expanded polystyrene plate (4).

2. Method according to claim 1, where the textured shower tray mold (3) is obtained by means of the following steps:
- applying a catalyzed resin on a glass fiber fabric (5) placed on a part (6) having the desired texture for causing the glass fiber fabric (5) to adopt said texture; and
- sticking said textured glass fiber fabric (5) on a shower tray pre-mold (7).

3. Method according to claim 2, further comprising applying a support structure to the back side of the glass fiber fabric (5) for increasing its strength.

4. Method according to any of claims 2-3, where the pre-mold (7) is made of wood.

5. Method according to any of the previous claims, where the high density expanded polystyrene plate (4) is obtained from a cube (8) of raw high density expanded polystyrene by means of the following step:
- cutting the high density expanded polystyrene cube (8) in sheets (9); and
- making a drain hole (10) in each sheet (9) and providing each sheet (9) with a slope towards said drain hole (10).

6. Method according to any of the previous claims, where the glass fiber fabrics (2) comprise cut and dispersed threads, a binder in powder form, and an emulsion.

7. Method according to any of the previous claims, where the resin used for laminating the glass fiber fabrics (2) is an insaturated polyester resin.

8. Method according to any of the previous claims, further comprising the intermediate step of placing on the glass fiber fabrics (2) an extruded polypropylene net or mesh (11) before placing the shower tray shaped plate (4) inside the mold (3).

9. Method according to any of the previous claims, where the vacuum application step in turn comprises:
- placing a rigid cover (12) on the mold (3) and the plate (4);
- placing a vacuum spiral tube along que perimeter of the mold (3);
- placing a vacuum bag (13) around the mold (3); and
- applying vacuum to the vacuum bag (13) by means of a hose coupled to a vacuum machine.

10. Method according to claim 9, where the vacuum bag is a thermo stabilized nylon film having a high elongation characteristic and withstanding temperatures of up to 204 ºC, having an maximum elongation of 400%, and having a resistance to tension of 55 MPa.

## Patentansprüche

1. Methode zum Produzieren einer leichtgewichtigen strukturierten Duschwanne (1) mit rechteckiger oder quadratischer Form mit Neigungen, die diagonal von den Ecken der Duschwanne (1) zu einem Abflussloch (10) verlaufen, **dadurch gekennzeichnet, dass** sie die folgenden Schritte umfassen:
- Einfügen eines Glasfasergewebes (2) in eine strukturierte Duschwannenform (3);
- Laminieren des Glasfasergewebes (2) mit einem Harz, dass sich in der strukturierten Duschwannenform (3) befindet;
- Anordnen einer Platte aus hochdichtem expandiertem Polystyrol (4) mit der Form einer Duschwanne in die Form (3), auf das Glasfasergewebe (2); und
- Beaufschlagen der Form (3), des Glasfasergewebes (2) und der Platte aus hochdichtem expandiertem Polystyrol (4) mit Vakuum, um die Textur der Form (3) auf das Glasfasergewebe (2) zu prägen und das Glasfasergewebe (2) auf die Platte aus hochdichtem expandiertem Polystyrol (4) zu kleben.

2. Verfahren nach Anspruch 1, wobei die strukturierte Duschwannenform (3) anhand der folgenden Schritte erzielt wird:
- Anwenden eines katalysierten Harzes auf einem Glasfasergewebe (5), das auf ein Teil (6) angeordnet wird, welches die gewünschte Textur hat, die das Glasfasergewebe (5) annehmen soll; und
- Kleben des strukturierten Glasfasergewebes (5) auf eine Duschwannenvorform (7).

3. Verfahren nach Anspruch 2, weiter umfassend das Anwenden einer Tragstruktur auf der Rückseite des Glasfasergewebes (5), um dessen Festigkeit zu erhöhen.

4. Verfahren nach einem der Ansprüche 2-3, wobei die Vorform (7) aus Holz hergestellt ist.

5. Verfahren nach einem der vorstehenden Ansprüche, wobei die Platte aus hochdichtem expandiertem Polystyrol aus einem Würfel aus hochdichtem expandiertem Polystyrol anhand der folgenden Schritte gewonnen wird:
- Schneiden des Würfels aus hochdichtem expandiertem Polystyrol (9) in Platten (9); und
- Erstellen eines Abflussloches (10) in jede Platte (9) und Versehen aller Platten (9) mit einer zum Abflussloch (10) gerichteten Neigung

6. Verfahren nach einem der vorstehenden Ansprüche, wobei das Glasfasergewebe (2) eingeschnittene und verteilte Gewinde, ein pulverförmiges Bindemittel und eine Emulsion umfasst.

7. Verfahren nach einem der vorstehenden Ansprüche, wobei das zum Laminieren des Glasfasergewebes (2) verwendete Harz ein ungesättigtes Polyesterharz ist.

8. Verfahren nach einem der vorstehenden Ansprüche, weiter umfassend den Zwischenschritt der Anordnung eines Netzes oder einer Masche (11) aus extrudiertem Polypropylen auf das Glasfasergewebe (2), bevor die Platte mit der Duschwannenform (4) in die Form (4) gelegt wird.

9. Verfahren nach einem der vorstehenden Ansprüche, wobei der Schritt der Vakuumanwendung wiederum umfasst:
- Platzieren einer steifen Abdeckung (12) auf die Form (3) und die Platte (4);
- Platzieren einer Vakuumspiralleitung am Umfang der Form (3);
- Platzieren eines Vakuumbeutels (13) um die Form (3); und
- Beaufschlagung des Vakuumbeutels (13) mit Vakuum anhand eines mit einem Vakuumgerät verbundenen Schlauches.

10. Verfahren nach Anspruch 9, wobei der Vakuumbeutel eine thermisch stabilisierte Nylonfolie mit hoher Dehnungseigenschaft und temperaturbeständig bis zu 204 ° C ist, mit einer maximalen Dehnung von 400 % und mit einer Zugfestigkeit von 55 MPa.

## Revendications

1. Méthode de fabrication d'un plateau de douche texturé léger (1) ayant une forme rectangulaire ou carrée avec pentes en diagonale à partir des angles du plateau de douche (1) vers un orifice de drainage (10), **caractérisé par** la réalisation des étapes suivantes :
- introduction de tissus en fibre de verre (2) à l'intérieur d'un moule de plateau de douche texturé (3) ;
- laminage des tissus en fibre de verre (2) avec une résine dans le moule de plateau de douche texturé (3) ;
- positionnement d'une plaque en polystyrène expansé haute densité (4) avec une forme de plaque de douche à l'intérieur du moule (3), sur les tissus en fibre de verre laminés (2) ; et
- application de vide sur le moule (3), les tissus en fibres de verre (2) et la plaque en polystyrène expansé haute densité (4) pour transférer l'empreinte de la texture dudit moule (3) sur les tissus en fibres de verre (2) et encollage desdits tissus en fibres de verre (2) sur la plaque en polystyrène expansé haute densité (4).

2. Méthode selon la revendication 1, où le moule du plateau de douche texturé (3) est obtenu au moyen des étapes suivantes :
- application d'une résine catalysée sur un tissu en fibre de verre (5) placé sur une partie (6) ayant la texture souhaitée pour amener la fibre de verre (5) à adopter cette texture ; et
- encollage dudit tissu en fibre de verre texturée (5) sur un pré-moule de plateau de douche (7).

3. Méthode selon la revendication 2, comprenant en outre l'application d'une structure de soutien à la partie arrière du tissu en fibre de verre (5) pour augmenter sa résistance.

4. Méthode selon l'une quelconque des revendications 2-3 où le pré-moule (7) est en bois.

5. Méthode selon l'une quelconque des revendications précédentes, où la plaque en polystyrène expansé haute densité (4) est obtenue à partir d'un cube (8) de polystyrène expansé haute densité brut au moyen de l'étape suivante :
- découpe du cube de polystyrène expansé haute densité (8) en plaques (9) ; et
- réalisation d'un orifice de drainage (10) dans chaque plaque (9) et formation d'une déclivité sur chaque plaque (9) vers ledit orifice de drainage (10).

6. Méthode selon l'une quelconque des revendications précédentes, où le tissu en fibre de verre (2) comprend des fils coupés et dispersés, un liant en poudre et une émulsion.

7. Méthode selon l'une quelconques des revendications précédentes, où la résine utilisée pour la laminage des fibres de verre (2) est une résine polyester insaturée.

8. Méthode selon l'une quelconque des revendications précédentes, comprenant en outre l'étape intermédiaire de positionnement sur le tissu en fibres de verre (2) d'un filet ou d'une maille en polypropylène extrudé (11) avant de placer la plaque en forme de plateau de douche (4) dans le moule (3).

9. Méthode selon l'une quelconque des revendications précédentes, où l'étape d'application de vide comprend à son tour :
- la pose d'un couvercle rigide (12) sur le moule (3) et la plaque (4) ;
- la pose d'un tube spirale de vide le long du périmètre du moule (3) ;
- la pose d'un sac à vide (13) autour du moule (3) ; et
- l'application de vide sur le sac à vide (13) au moyen d'un tuyau couplé à une machine à vide.

10. Méthode selon la revendication 9, où le sac à vide est un film de nylon thermostabilisé ayant une caractéristique d'allongement élevée et des températures de résistance allant jusqu'à 204° C, avec un allongement maximum de 400 % et une résistance à la tension de 55 MPa.
